# EUROPEAN PATENT SPECIFICATION

(11) **EP 2 179 902 B1**
(45) Date of publication and mention of the grant of the patent: **05.07.2017**
(21) Application number: 09172451.8
(22) Date of filing: 07.10.2009
(51) Int. Cl.: B60T 11/30, B60T 13/68, B60T 17/22, F15B 11/00

(54) **System for bleeding a valve in a vehicle hydraulic system**
System zum Entlüften eines Ventils in einem hydraulischen System eines Fahrzeugs
Système pour purger une soupape dans un système hydraulique de véhicule

(30) Priority: 22.10.2008 US 256190
(43) Date of publication of application: 28.04.2010
(73) Proprietor: Deere & Company, Moline, IL 61265 (US)
(72) Inventor: Sommer, Mark S, Cedar Falls, IA 50613 (US); Roe, Phillip S, Eldora, IA 50627 (US); Eagles, Derek M, Cedar Falls, IA 50613 (US); Seeber, Paul R, Hudson, IA 50643 (US)
(74) Representative: Dehnhardt, Florian Christopher

(56) References cited:
- EP-A1- 0 190 703
- JP-A- 2007 146 945
- US-A1- 2005 132 876

## Description

The present invention relates to a vehicle hydraulic system for bleeding a valve.

Utility vehicles, such as tractors, often include hydraulic directional control valves known as selective control valves (SCV). These selective control valves typically include a main spool and pilot operated check valves between the main spool and the hydraulic connectors to which a hydraulic function, such as a hydraulic cylinder, can be connected. Such valves may trap oil at a low leakage rate between the main spool and the pilot operated check valves when the main spool is in a neutral position. As a result, thermal expansion of the oil can create pressures that can damage the valves. It is known to protect valves from such damage by providing a physical relief valve in the system. Such thermal relief valves are very common in the hydraulic industry. However, thermal relief valves are costly, they can increase leakage rates, and they have hysteresis which results in an undesirable range of operating points for opening and closing.

JP 2007 146945 A discloses a hydraulic control valve having an escape passage that prevents pressure rise in an output port of the control valve in case the spool is in a neutral position.

Accordingly, an object of this invention is to provide a system for automatically bleeding selective control valves in a vehicle hydraulic system.

A further object of the invention is to provide such a system which prevents valve damage resulting from thermal expansion of trapped oil.

A further object of the invention is to provide such a system which does not require physical relief valves.

These objects are achieved by the present invention, wherein a vehicle hydraulic system for bleeding a valve is described. The vehicle hydraulic system includes a valve control unit and a hydraulic directional control valve having first and second work ports, a first and a second pilot operated check valve, whereas the first and second work ports are connected to the respective first and a second pilot operated check valve, and a main spool for controlling communication between a pump , a hydraulic reservoir and the first and the second work ports, the main spool being movable from a neutral position to an extend position and to a retract position and to respective first and second bleed positions wherein the respective work port is communicated with the hydraulic reservoir, whereas the valve control unit automatically generates first and second bleed commands, the main spool being movable, in response to the first bleed command, to the first bleed position and, in response to the second bleed command, to the second bleed position.

The valve control unit prevents generation of a bleed command if the selective control valve is in its extend or retract position under command of the operator. The control unit prevents generation of a bleed command if a temperature of hydraulic fluid in the hydraulic reservoir is not less than a reference temperature. The valve control unit prevents generation of a bleed command if a speed of the vehicle is less than a reference speed. The valve control unit automatically returns the main spool to its neutral position after the first and second bleed commands have been generated.

For a complete understanding of the objects, techniques, and structure of the invention reference should be made to the following detailed description and accompanying drawings:
- Fig. 1: is a schematic diagram of a system for bleeding a valve in a vehicle hydraulic system embodying the present invention;
- Fig. 2: is a sectional view of a selective control valve according to Fig. 1; and
- Fig. 3: is a logic flow diagram of an algorithm executed by a valve control unit according to Fig. 1.

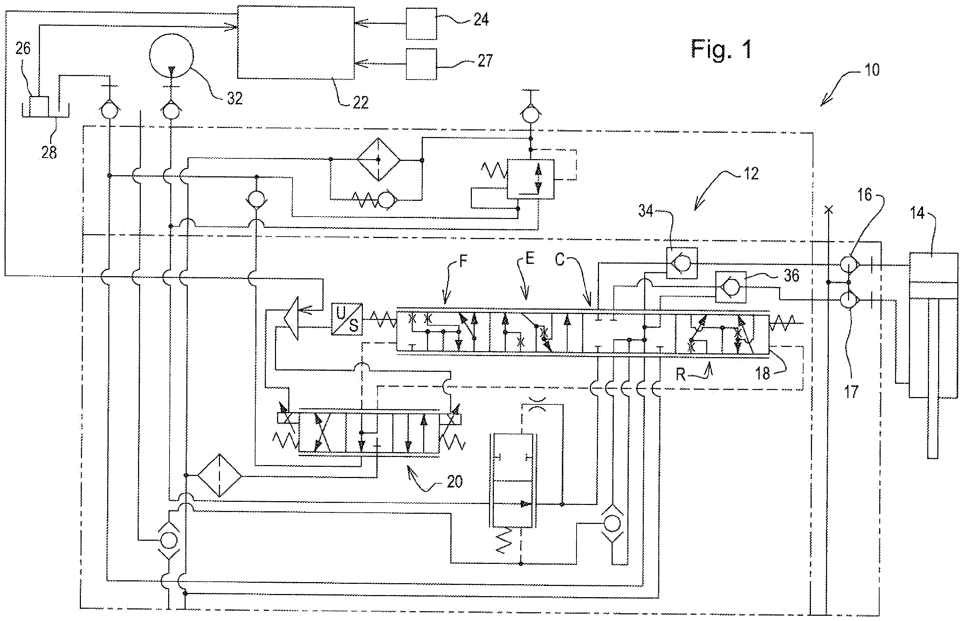

Referring to Fig. 1, a bleeding system 10 includes a hydraulic directional control valve 12 formed by selective control valve (SCV) which has a main spool 18 which controls the flow of pressurized hydraulic fluid to a hydraulic function, such as a hydraulic cylinder 14 which is connected to the selective control valve 12 by hydraulic connectors 16 and 17 and pilot operated check valves 34 and 36. Main spool 18 is moved by hydraulic pressure controlled by solenoid operated pilot valve 20. Selective control valve 12 is connected to a hydraulic (clean oil) reservoir 28 and to a pump 32. Selective control valve 12 is controlled by a valve control unit 22 formed by an electronic control unit (ECU) which supplies signals to the solenoids of the pilot valve 20. ECU 22 responds to the operation of a conventional control valve lever 24, and receives a temperature signal from temperature sensor 26 and a vehicle speed signal from a vehicle speed sensor 27. Main spool 18 is movable from a neutral or closed position C, to a retract position R, an extend position E and to a float position F.

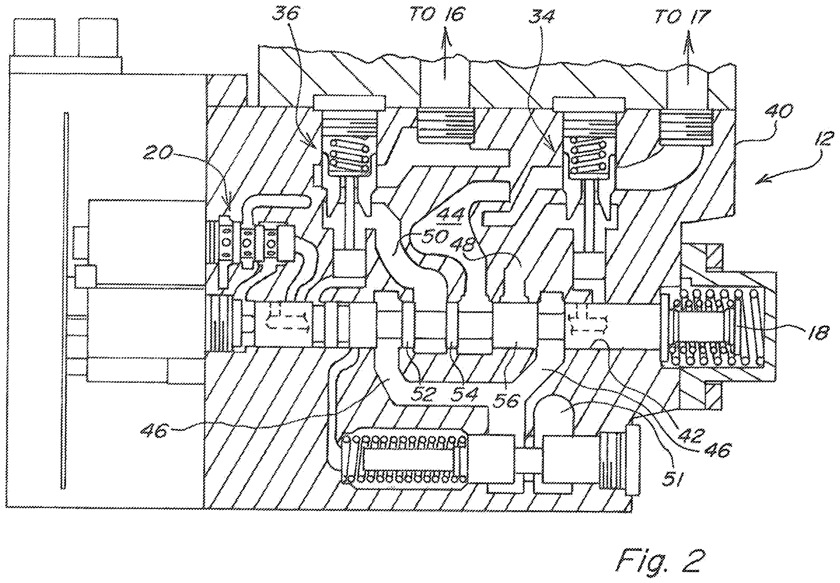

As best seen in Fig. 2, selective control valve 12 is of conventional type and includes a housing 40 with a main valve bore 42. Main spool 18 is shown in the neutral position and is controlled by pilot valve 20. Main valve bore 42 is communicated with a sump or tank passage 44, a pair of pump passages 46, and a pair of work ports 48 and 50. Pump passages 46 are communicated to a pump port 51. Work ports 48 and 50 are connected to the hydraulic cylinder 14 via check valves 34 and 36 to hydraulic connectors 16 and 17. Main spool 18 includes lands 52, 54 and 56. The lands 52, 54 and 56 as well as the passages 44 and 46 are dimensioned so that when main spool 18 is moved a small distance to the right, such as a few millimeters for example, land 56 communicates tank passage 44 to work port 48 before land 52 communicates pump passage 46 to work port 50. This bleeds and releases trapped pressurized hydraulic fluid from work port 48. Similarly, when spool 18 is moved a small distance to the left, such as a few millimeters for example, land 54 communicates tank passage 44 to work port 50 before land 56 communicates pump passage 46 to work port 48. This bleeds and releases trapped pressurized hydraulic fluid from work port 50.

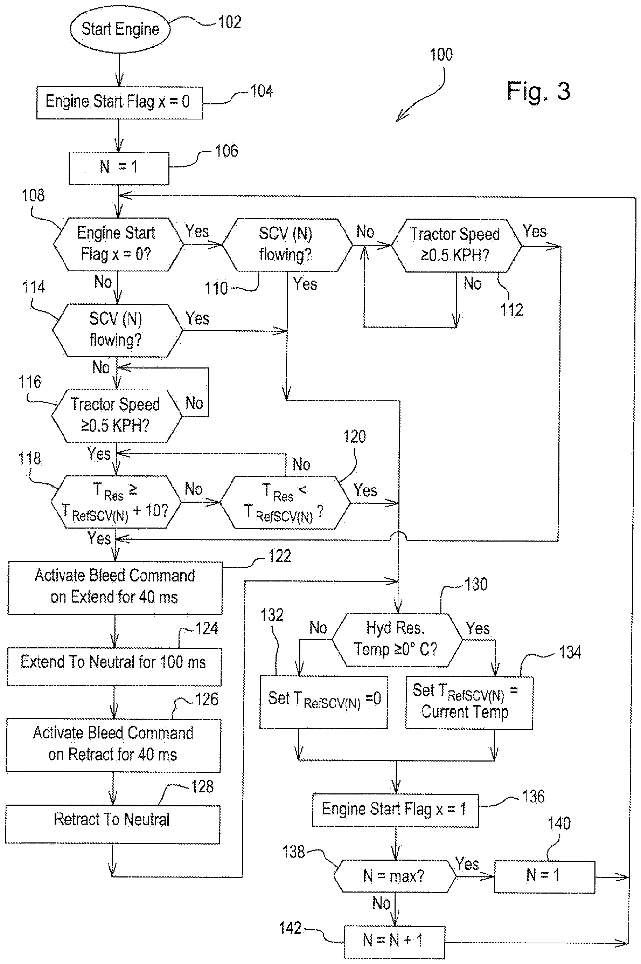

The ECU 22 repeatedly executes an algorithm 100 represented by Fig. 3. The conversion of the above flow chart into a standard language for implementing the algorithm described by the flow chart in a digital computer or microprocessor, will be evident to one with ordinary skill in the art.

The algorithm starts at step 102 upon start-up of the vehicle engine (not shown).

Step 104 sets an Engine Start Flag x = 0.

Step 106 sets an SCV index number N = 1.

If the Engine Start Flag is x = 0, then step 108 directs control to step 110, else to step 114.

If the Nth SCV is flowing, step 110 directs control to step 130, else to step 112.

If vehicle speed is greater than or equal to a threshold speed, such as 0.5 KPH, then step 112 directs control to step 122, else back to step 112.

If the Nth SCV is flowing, step 114 directs control to step 130, else to step 116.

If vehicle speed is greater than or equal to a threshold speed, such as 0.5 KPH, then step 116 directs control to step 118, else back to step 116.

If the hydraulic reservoir temperature T_{Res}, is greater than or equal to a reference temperature T_{RefSCV(N)} associated with the Nth SCV plus 10 °C, then step 118 directs control to step 122, else to step 120.

If the hydraulic reservoir temperature T_{Res}, is less than reference temperature T_{RefSCV(N)}, then step 120 directs control to step 130, else back to step 118.

Step 122 generates an extend bleed command for 40 milliseconds. This causes the main spool 18 to move to the left, viewing Fig. 2, to an extend bleed position wherein work port 48 is connected to sump passage 44 while work port 50 remains blocked with respect to both pump passage 46 and sump passage 44.

Step 124 then generates a neutral command which moves main spool 18 to its neutral position for 100 milliseconds.

Next, step 126 generates a retract bleed command for 40 milliseconds. This causes the main spool 18 to move to the right, viewing Fig. 2, to a retract bleed position wherein work port 50 is connected to sump passage 44 while work port 48 remains blocked with respect to both pump passage 46 and sump passage 44.

Step 128 generates a command to move the main spool 18 back to neutral, then directs control to step 130.

If the hydraulic reservoir temperature T_{Res} is greater than or equal to 0 °C, then step 130 directs control to step 134, else to step 132.

Step 132 sets the reference temperature T_{RefSCV(N)} for the Nth SCV equal to 0 °C, then directs control to step 136.

Step 134 sets the reference temperature T_{RefSCV(N)} equal to the current hydraulic reservoir temperature T_{Res}, then directs control to step 136.

Step 136 sets the Engine Start Flag x = 1, then directs control to step 138.

If N is equal to its maximum value, indicating that this process has been performed for all SCVs, then step 138 directs control to step 140, else to step 142.

Step 140 sets the SCV index N = 1, and directs control to step 108.

Step 142 increases the SCV index value N by 1, and directs control to step 108.

The resulting system automatically commands the main spool 18 to move to a position where one of the work ports 48, 50 is allowed to drain without opening the pressure port, so that trapped pressure in the system is bled. This command can be issued at several points in the operation of the vehicle, such as startup, engine running and engine shutdown. This prevents the pressure from building up to a point where a physical thermal relief valve would be necessary.

The system of this invention generates a first bleed command to hold the main spool 18 in the first bleed position for a first time period, after which the ECU 22 generates a neutral command to hold the main spool 18 in its neutral position for a second time period, and after which the ECU 22 generates the second bleed command to hold the main spool 18 in the second bleed position for a third time period. Preferably, the first time period is shorter (approx. 40 milliseconds) than the second time period (approx. 100 milliseconds). Preferably, the first time period is equal to the third time period.

Preferably, the ECU 22 prevents generation of a bleed command if the selective control valve 12 is in its extend or retract position, prevents generation of a bleed command if a temperature of hydraulic fluid in the hydraulic reservoir 28 is not less than a reference temperature, and prevents generation of a bleed command if a speed of the vehicle is less than a reference speed.

Preferably, the ECU 22 automatically returns the main spool 18 to its neutral position after the first and second bleed commands have been generated.

This system can be used to limit pressure buildup in an uncoupled SCV to a pressure such as 350 bar by allowing a retract or extend command to bleed off the pressure between the check valves 34, 36 and the hydraulic connectors 16, 17.

The length of time to issue the bleed command to both the extend and retract position should be minimized to assure the decay of 350 bar of pressure to less than 25 bar for an uncoupled SCV, but limit the amount of oil bleed from the work port. This time can be determined experimentally based on lab tests and simulations. The expected time is preferably less than 40 milliseconds and preferably between 10 to 20 milliseconds.

Preferably, a bleed event is prevented if hydraulic reservoir temperature is less than 0 °C.

Preferably, as a special case, after vehicle start, a bleed event is performed only if the vehicle speed is not less than 0.5 KPH. Then, after vehicle motion has begun, subsequent bleed events require both a hydraulic reservoir temperature change of 10 °C and a vehicle speed not less than 0.5 KPH.

Preferably, a bleed event may be commanded to occur on all SCVs for both retract and extend, unless a SCV is currently commanded by the operator to be flowing oil, in which case the bleed event can be skipped.

The reference temperature from which the 10 °C increase is measured and set at the following conditions: 1) when the vehicle is initially started, 2) when a bleed event is commanded, and 3) while the vehicle is running for every 1 °C decrease in hydraulic reservoir temperature from the last set point.

This feature can be added at a low product cost in software with a high reliability. The pressure relief can be programmed to only occur when the potential for pressure increases due to thermal expansion are present. There is no hysteresis like physical relief valves as the main spool is commanded to a specific position. In a hydraulic system having multiple SCVs, the system operates to automatically and sequentially bleed the valves.

## Claims

1. A vehicle hydraulic system including
a valve control unit (22) and
a hydraulic directional control valve (12) having
first and second work ports (48, 50), a first and a second pilot operated check valve (34, 36), wherein the first and second work ports (48, 50) are connected to the respective first and second pilot operated check valve (34, 36), and a main spool (18) for controlling communication between a pump (32), a hydraulic reservoir (28) and the first and the second work ports (48, 50),
the main spool (18) being movable from a neutral position to an extend position and to a retract position and to respective first and second bleed positions wherein the respective work port (48, 50) is communicated with the hydraulic reservoir (28), wherein
the valve control unit (22) automatically generates first and second bleed commands, the main spool (18) being movable, in response to the first bleed command, to the first bleed position wherein a first one of the work ports (48, 50) is communicated with the hydraulic reservoir (28) and a second one of the work ports (50, 48) is not communicated with the pump (32), and, in response to the second bleed command, to the second bleed position wherein the second work port (50, 48) is communicated with the hydraulic reservoir (28) and the first work port (48, 50) is not communicated with the pump (32); and the valve control unit (22) generating the first bleed command to hold the main spool (18) in the first bleed position for a first time period, after which the valve control unit (22) generates a neutral command to hold the main spool (18) in its neutral position for a second time period, and after which the valve control unit (22) generates the second bleed command to hold the main spool (18) in the second bleed position for a third time period.

2. The system according to claim 1, **characterized in that** the first time period is shorter than the second time period.

3. The system according to claim 1 or 2, **characterized in that** the first time period is equal to the third time period.

4. The system according to one of claims 1 to 3. **characterized in that** the valve control unit (22) prevents generation of a bleed command if the directional control valve (12) is being commanded to flow oil.

5. The system according to one of claims 1 to 4, **characterized in that** the valve control unit (22) prevents generation of a bleed command if the directional control valve (12) is in its extend position.

6. The system according to one of claims 1 to 5, **characterized in that** the valve control unit (22) prevents generation of a bleed command if the directional control valve (12) is in its retract position.

7. The system according to one of claims 1 to 6, **characterized in that** the valve control unit (22) prevents generation of a bleed command if a hydraulic reservoir temperature is not less than a reference temperature.

8. The system according to one of claim 7, **characterized in that** the valve control unit (22) modifies the reference temperature if the directional control valve (12) is commanded to flow hydraulic fluid by an operator.

9. The system according to one of claims 1 to 8, **characterized in that** the valve control unit (22) prevents generation of a bleed command if a speed of the vehicle is less than a reference speed.

10. The system according to one of claims 1 to 9, **characterized in that** the valve control unit (22) automatically returns the main spool (18) to its neutral position after the first and second bleed commands have been generated.

11. The system according to claim 1, **characterized by** further including a temperature sensor (26) for sensing a temperature of hydraulic fluid in the hydraulic reservoir (28) and generating a temperature signal which is communicated to the valve control unit (22), the valve control unit (22) automatically generating a bleed command when the sensed hydraulic reservoir temperature is at least a reference temperature, the main spool (18) being movable, in response to the bleed command, to the bleed position.

12. The system according to claim 11, **characterized by** further including a vehicle speed sensor (27) for sensing a speed of the vehicle and generating a vehicle speed signal which is communicated to the valve control unit (22), the valve control unit (22) automatically generating a bleed command when the vehicle speed is at least a threshold speed and the sensed hydraulic reservoir temperature is at least the reference temperature, the main spool (18) being movable, in response to the bleed command, to the bleed position.

## Patentansprüche

1. Hydraulisches System eines Fahrzeugs, umfassend:
eine Ventilsteuereinheit (22) und
ein hydraulisches Wegeventil (12) aufweisend einen ersten und einen zweiten Arbeitsanschluss (48, 50), ein erstes und ein zweites pilotgesteuertes Rückschlagventil (34, 36), wobei der erste und der zweite Arbeitsanschluss (48, 50) mit dem ersten bzw. dem zweiten pilotgesteuerten Rückschlagventil (34, 36) verbunden sind, und einen Hauptschieber (18), der aus einer Neutralstellung in eine ausgezogene Stellung und in eine eingezogene Stellung und in eine erste bzw. eine zweite Entlüftungsstellung beweglich ist, wobei der jeweilige Arbeitsanschluss (48, 50) mit dem Hydraulikbehälter (28) in Verbindung gebracht ist, wobei die Ventilsteuereinheit (22) automatisch einen ersten und einen zweiten Entlüftungsbefehl erzeugt, wobei der Hauptschieber (18) als Reaktion auf den ersten Entlüftungsbefehl in die erste Entlüftungsstellung beweglich ist, in der ein erster der Arbeitsanschlüsse (48, 50) mit dem Hydraulikbehälter (28) in Verbindung gebracht ist und ein zweiter der Arbeitsanschlüsse (50, 48) nicht mit der Pumpe (32) in Verbindung gebracht ist, und als Reaktion auf den zweiten Entlüftungsbefehl in die zweite Entlüftungsstellung beweglich ist, in der der zweite Arbeitsanschluss (50, 48) mit dem Hydraulikbehälter (28) in Verbindung gebracht ist und der erste Arbeitsanschluss (48, 50) nicht mit der Pumpe (32) in Verbindung gebracht ist; und wobei die Ventilsteuereinheit (22) den ersten Entlüftungsbefehl zum Halten des Hauptschiebers (18) in der ersten Entlüftungsstellung für eine erste Zeitdauer erzeugt, wonach die Ventilsteuereinheit (22) einen Neutralbefehl zum Halten des Hauptschiebers (18) in seiner Neutralstellung für eine zweite Zeitdauer erzeugt und wonach die Ventilsteuereinheit (22) den zweiten Entlüftungsbefehl zum Halten des Hauptschiebers (18) in der zweiten Entlüftungsstellung für eine dritte Zeitdauer erzeugt.

2. System nach Anspruch 1, **dadurch gekennzeichnet, dass** die erste Zeitdauer kürzer als die zweite Zeitdauer ist.

3. System nach Anspruch 1 oder 2, **dadurch gekennzeichnet, dass** die erste Zeitdauer gleich der dritten Zeitdauer ist.

4. System nach einem der Ansprüche 1 bis 3, **dadurch gekennzeichnet, dass** die Ventilsteuereinheit (22) das Erzeugen eines Entlüftungsbefehls verhindert, wenn das Wegeventil (12) zum Leiten von Öl angesteuert wird.

5. System nach einem der Ansprüche 1 bis 4, **dadurch gekennzeichnet, dass** die Ventilsteuereinheit (22) das Erzeugen eines Entlüftungsbefehls verhindert, wenn sich das Wegeventil (12) in seiner ausgezogenen Stellung befindet.

6. System nach einem der Ansprüche 1 bis 5, **dadurch gekennzeichnet, dass** die Ventilsteuereinheit (22) das Erzeugen eines Entlüftungsbefehls verhindert, wenn sich das Wegeventil (12) in seiner eingezogenen Stellung befindet.

7. System nach einem der Ansprüche 1 bis 6, **dadurch gekennzeichnet, dass** die Ventilsteuereinheit (22) das Erzeugen eines Entlüftungsbefehls verhindert, wenn eine Hydraulikbehältertemperatur unter einer Bezugstemperatur liegt.

8. System nach Anspruch 7, **dadurch gekennzeichnet, dass** die Ventilsteuereinheit (22) die Bezugstemperatur ändert, wenn das Wegeventil (12) durch einen Bediener zum Leiten von Hydraulikfluid angesteuert wird.

9. System nach einem der Ansprüche 1 bis 8, **dadurch gekennzeichnet, dass** die Ventilsteuereinheit (22) das Erzeugen eines Entlüftungsbefehls verhindert, wenn eine Geschwindigkeit des Fahrzeugs unter einer Bezugsgeschwindigkeit liegt.

10. System nach einem der Ansprüche 1 bis 9, **dadurch gekennzeichnet, dass** die Ventilsteuereinheit (22) den Hauptschieber (18) nach Erzeugen des ersten und des zweiten Entlüftungsbefehls automatisch in seine Neutralstellung zurückführt.

11. System nach Anspruch 1, **dadurch gekennzeichnet, dass** es ferner einen Temperatursensor (26) zum Erfassen einer Temperatur von Hydraulikfluid im Hydraulikbehälter (28) und zum Erzeugen eines Temperatursignals, das zu der Ventilsteuereinheit (22) geleitet wird, enthält, wobei die Ventilsteuereinheit (22) automatisch einen Entlüftungsbefehl erzeugt, wenn die erfasste Hydraulikbehältertemperatur mindestens eine Bezugstemperatur ist, wobei der Hauptschieber (18) als Reaktion auf den Entlüftungsbefehl in die Entlüftungsstellung beweglich ist.

12. System nach Anspruch 11, **dadurch gekennzeichnet, dass** es ferner einen Fahrzeuggeschwindigkeitssensor (27) zum Erfassen einer Geschwindigkeit des Fahrzeugs und zum Erzeugen eines Fahrzeuggeschwindigkeitssignals, das zu der Ventilsteuereinheit (22) geleitet wird, enthält, wobei die Ventilsteuereinheit (22) automatisch einen Entlüftungsbefehl erzeugt, wenn die Fahrzeuggeschwindigkeit mindestens eine Schwellengeschwindigkeit ist und die erfasste Hydraulikbehältertemperatur mindestens die Bezugstemperatur ist, wobei der Hauptschieber (18) als Reaktion auf den Entlüftungsbefehl in die Entlüftungsstellung beweglich ist.

## Revendications

1. Système hydraulique de véhicule, comportant :
une unité de commande de soupape (22) et une soupape de commande directionnelle hydraulique (12) ayant
des premier et deuxième orifices de travail (48, 50), un premier et un deuxième clapet antiretour (34, 36) à commande pilote, le premier et le deuxième orifice de travail (48, 50) étant connectés au premier et au deuxième clapet antiretour à commande pilote respectif (34, 36), et
une bobine principale (18) pour commander la communication entre une pompe (32), un réservoir hydraulique (28) et le premier et le deuxième orifice de travail (48, 50),
la bobine principale (18) pouvant être déplacée d'une position neutre dans une position déployée et dans une position rétractée et dans des première et deuxième positions de purge respectives,
l'orifice de travail respectif (48, 50) étant mis en communication avec le réservoir hydraulique (28),
l'unité de commande de soupape (22) générant automatiquement des première et deuxième commandes de purge, la bobine principale (18) pouvant être déplacée, en réponse à la première commande de purge, dans la première position de purge dans laquelle un premier des orifices de travail (48, 50) est mis en communication avec le réservoir hydraulique (28) et un deuxième des orifices de travail (50, 48) n'est pas mis en communication avec la pompe (32), et, en réponse à la deuxième commande de purge, dans la deuxième position de purge dans laquelle le deuxième orifice de travail (50, 48) est mis en communication avec le réservoir hydraulique (28) et le premier orifice de travail (48, 50) n'est pas mis en communication avec la pompe (32) ; et l'unité de commande de soupapes (22) générant la première commande de purge pour maintenir la bobine principale (18) dans la première position de purge pendant une première période de temps après laquelle l'unité de commande de soupape (22) génère une commande neutre pour maintenir la bobine principale (18) dans sa position neutre pendant une deuxième période de temps, après laquelle l'unité de commande de soupape (22) génère la deuxième commande de purge pour maintenir la bobine principale (18) dans la deuxième position de purge pendant une troisième période de temps.

2. Système selon la revendication 1, **caractérisé en ce que** la première période de temps est plus courte que la deuxième période de temps.

3. Système selon la revendication 1 ou 2, **caractérisé en ce que** la première période de temps est égale à la troisième période de temps.

4. Système selon l'une quelconque des revendications 1 à 3, **caractérisé en ce que** l'unité de commande de soupape (22) empêche la génération d'une commande de purge si la soupape de commande directionnelle (12) est commandée pour laisser s'écouler de l'huile.

5. Système selon l'une quelconque des revendications 1 à 4, **caractérisé en ce que** l'unité de commande de soupape (22) empêche la génération d'une commande de purge si la soupape de commande directionnelle (12) est dans sa position déployée.

6. Système selon l'une quelconque des revendications 1 à 5, **caractérisé en ce que** l'unité de commande de soupape (22) empêche la génération d'une commande de purge si la soupape de commande directionnelle (12) est dans sa position rétractée.

7. Système selon l'une quelconque des revendications 1 à 6, **caractérisé en ce que** l'unité de commande de soupape (22) empêche la génération d'une commande de purge si une température du réservoir hydraulique n'est pas inférieure à une température de référence.

8. Système selon la revendication 7, **caractérisé en ce que** l'unité de commande de soupape (22) modifie la température de référence si la soupape de commande directionnelle (12) est commandée pour laisser s'écouler du fluide hydraulique par un opérateur.

9. Système selon l'une quelconque des revendications 1 à 8, **caractérisé en ce que** l'unité de commande de soupape (22) empêche la génération d'une commande de purge si une vitesse du véhicule est inférieure à une vitesse de référence.

10. Système selon l'une quelconque des revendications 1 à 9, **caractérisé en ce que** l'unité de commande de soupape (22) ramène automatiquement la bobine principale (18) dans sa position neutre après que les première et deuxième commandes de purge ont été générées.

11. Système selon la revendication 1, **caractérisé en ce qu'**il comporte en outre un capteur de température (26) pour détecter une température de fluide hydraulique dans le réservoir hydraulique (28) et pour générer un signal de température qui est communiqué à l'unité de commande de soupape (22), l'unité de commande de soupape (22) générant automatiquement une commande de purge quand la température du réservoir hydraulique détectée est au moins une température de référence, la bobine principale (18) pouvant être déplacée dans la position de purge en réponse à la commande de purge.

12. Système selon la revendication 11, **caractérisé en ce qu'**il comporte en outre un capteur de vitesse de véhicule (27) pour détecter une vitesse du véhicule et générer un signal de vitesse de véhicule qui est communiqué à l'unité de commande de soupape (22), l'unité de commande de soupape (22) générant automatiquement une commande de purge quand la vitesse du véhicule est au moins une vitesse de seuil et que la température du réservoir hydraulique détectée est au moins la température de référence, la bobine principale (18) pouvant être déplacée dans la position de purge en réponse à la commande de purge.
